# EUROPÄISCHE PATENTSCHRIFT

(11) **EP 2 508 873 B1**
(45) Veröffentlichungstag und Bekanntmachung des Hinweises auf die Patenterteilung: **09.12.2015**
(21) Anmeldenummer: 12002389.0
(22) Anmeldetag: 02.04.2012
(51) Int. Cl.: G01N 25/18, G01N 27/18, G01N 27/22

(54) **Flächensensor zum Messen einer thermischen Transportgröße und zugeordnetes Verfahren**
Surface sensor for measuring a thermal transport quantity and method
Capteur de surface pour la mesure d'une grandeur de transport thermique et procédé approprié

(30) Priorität: 06.04.2011 DE 102011016265
(43) Veröffentlichungstag der Anmeldung: 10.10.2012
(73) Patentinhaber: Pausch, Gerhard, 42781 Haan (DE)
(72) Erfinder: Pausch, Gerhard, 42781 Haan (DE)
(74) Vertreter: Plöger, Jan Manfred

(56) Entgegenhaltungen:
- DE-A1- 2 754 669
- DE-A1- 3 446 277
- DE-A1-102005 006 861
- DE-A1-102009 009 762
- US-A- 4 048 594
- US-A- 5 196 753
- US-A1- 2002 036 507
- US-A1- 2002 089 258
- US-A1- 2009 273 352
- US-A1- 2009 308 155
- LIPING CAI ET AL: "Inverse determination of thermal conductivity in frozen lumber", WOOD SCIENCE AND TECHNOLOGY ; JOURNAL OF THE INTERNATIONAL ACADEMY OF WOOD SCIENCE, SPRINGER, BERLIN, DE, Bd. 40, Nr. 8, 29. April 2006 (2006-04-29) , Seiten 665-672, XP019458341, ISSN: 1432-5225, DOI: 10.1007/S00226-006-0079-4

## Beschreibung

Die Erfindung betrifft eine Messvorrichtung gemäß dem Oberbegriff von Anspruch 1. Gemäß einem zweiten Aspekt betrifft die Erfindung ein Verfahren zum Messen einer thermischen Transportgröße eines Prüflings, insbesondere aus Holz.

Eine gattungsgemäße Messvorrichtung ist aus der DE 10 2009 009 762 bekannt und dient zum Messen der Wärmeleitfähigkeit und/oder der Temperaturleitfähigkeit. Es hat sich gezeigt, dass eine derartige Messvorrichtung beim Charakterisieren beispielsweise von Holz oft wenig aussagekräftige Messergebnisse liefert.

Aus der DE 10 2005 006 861 A1 ist ein Eissensor bekannt, der einen gewundenen Leiter aufweist. Je nach Benetzung des Flächensensors mit Wasser ändert sich die Eigenfrequenz des Sensors, woraus der Benetzungsgrad berechenbar ist. Ein derartiger Sensor ist für die Messung an Holz wenig geeignet, da die induktive kapazitive Kopplung zwischen Sensor und Holz auch von den Eigenschaften des Holzes abhängig ist Diese Kopplung ist ihrerseits aber meist unbekannt.

Aus der DE 34 46 277 A1 ist ein Messwertaufnehmer zur Messung des Taupunkts bekannt. Ein derartiger Sensor ist für die Feuchtigkeitsmessung an Holz und ähnlichen Prüflingen weitgehend ungeeignet, da es dort nicht zu Taupunktunterschreitungen kommt. Ein weiterer Taupunktsensor ist aus der US 2002/0036507 A1 bekannt.

Die US 2009/0308155 A1 beschreibt einen passiven Feuchtigkeitssensor, der gleichzeitig einen Temperatursensor umfasst. Der Feuchtigkeitssensor funktioniert auf der Basis der Eigenfrequenzbestimmung, was die oben geschilderten Nachteile hat.

Aus dem Artikel "Inverse determination of thermal conduktivity in frozen lumber" von Cai et al ist eine Messung der thermischen Transportgröße an gefrorenem Holz bekannt. Die Feuchtigkeit des Holzes muss bei dem in der Druckschrift beschriebenen Verfahren mittels eines zerstörenden Messverfahrens festgestellt werden.

Aus der US 2009/0273352 A1 ist ein flexibles Zeitdomain-Reflektorelement bekannt, das zusätzlich einen Temperatursensor aufweisen kann.

Der Erfindung liegt daher die Aufgabe zugrunde, die Messgenauigkeit bei der Messung von thermischen Transportgrößen zu verbessern, insbesondere bei der Charakterisierung von Prüflingen aus Holz, bei Messungen im Freien und/oder an Bodenproben.

Die Erfindung löst das Problem durch eine Messvorrichtung mit den Merkmalen von Anspruch 1.

Gemäß einem zweiten Aspekt löst die Erfindung das Problem durch ein Verfahren mit den Merkmalen des nebengeordneten Verfahrensanspruchs.

Vorteilhaft an der Erfindung ist, dass die thermische Transportgröße an Prüflingen besonders genau bestimmt werden kann, bei denen die Feuchte nicht von vornherein feststeht. Das ist insbesondere für Holz und Böden der Fall. Es hat sich nämlich gezeigt, dass die für die Charakterisierung von Holz wichtigen thermischen Transportgrößen wie die Wärmeleitfähigkeit und/oder die Temperaturleitfähigkeit stark vom Feuchtegehalt des Prüflings abhängen. Bei Holz hängen die Wärmeleitfähigkeit und damit die Dämmwirkung damit auch von der lokalen Feuchteverteilung im Material ab. Außerdem kann eine lokal erhöhte Feuchte zur Schimmelbildung und damit zur schnellen Zerstörung führen. Gerade bei Holz ist die Feuchte jedoch inhomogen verteilt, so dass das Messen der Feuchte an einer ersten Stelle und das Messen der thermischen Transportgröße an einer anderen Stelle zu nicht abschätzbaren Messfehlern führen. Dadurch, dass auf dem flächigen Sensorelement auch das Zeitdomain-Reflektorelement angeordnet ist, können die Messung der Feuchte und die Messung der thermischen Transportgröße in unmittelbar örtlicher Nähe zueinander durchgeführt werden. Systematische Messfehler werden so vermieden.

Der Erfindung liegt die Erkenntnis zugrunde, dass die an sich bekannte Zeitdomain-Reflektometrie zur Feuchtigkeitsmessung nicht wie bisher üblich mit massiven runden Elektroden durchgeführt werden muss, sondern das es möglich ist dünne Leiterbahnen auf einem Substrat dafür zu verwenden.

Grundsätzlich ist es für die Zeitdomain-Reflektometrie ungünstig, wenn in der Nähe der Leiter, im vorliegenden Fall der Leiterbahnen, metallische Objekte angeordnet werden, da es dann zu Reflexionen kommt, die die Auswertung erschweren. Es hat sich aber gezeigt, dass diese Reflexionen zwar die Auswertung erschweren, dass aber eine hinreichend hohe Messgenauigkeit erzielbar ist.

Auch wäre zu erwarten gewesen, dass die elektrischen Impulse bei der Zeitdomain-Reflektometrie die Messergebnisse bei der Messung der thermischen Transportgröße verfälschen, da sie Energie in den Prüfling einbringen. Es hat sich aber gezeigt, dass der verfälschende Einfluss tolerierbar klein ist.

Im Rahmen der vorliegenden Beschreibung wird unter einem flächigen Substrat insbesondere eine Kunststofffolie verstanden, beispielsweise aus Polyimid wie Kapton^{®}. Es sind aber auch biegesteife Substrate einsetzbar. Unter dem Merkmal, dass das Substrat flächig ist, wird insbesondere verstanden, dass eine Höhe höchstens ein Hundertstel einer Breite und/oder einer Länge des Substrats beträgt.

Unter dem flächigen Transportgrößen-Sensorelement wird insbesondere eine Struktur aus zumindest einem elektrischen Leiter auf dem Substrat verstanden, die so angeordnet ist, dass durch Bestromen eines Leiters ein Wärmestrom in den Prüfling einbringbar und dass durch Messen des elektrischen Widerstands, beispielsweise des zumindest einen elektrischen Leiters, die thermische Transportgröße bestimmbar ist. Es ist aber nicht notwendig, dass die Temperaturmessung über eine Widerstandsmessung des zum Heizen verwendeten elektrischen Leiters erfolgt. Es ist genauso möglich, dass das Transportgrößen-Sensorelement eine vom ersten elektrischen Leiter unabhängige Temperaturmessvorrichtung aufweist, beispielsweise einen unabhängigen zweiten Leiter, mittels dem die Temperatur an zumindest einer Stelle durch Bestimmen des elektrischen Widerstands messbar ist.

Unter dem Zeitdomain-Reflektorelement wird insbesondere eine Struktur auf dem Substrat verstanden, mittels der eine Zeitdomain-Reflektometriemessung durchführbar ist. Insbesondere sind die zumindest zwei Leiterbahnen nicht miteinander elektrisch kontaktiert, sondern bilden einen Kondensator. Das Zeitdomain-Reflektorelement könnte auch als Zeitbereichs-Reflektorelement bezeichnet werden, da auch der Begriff der Zeitbereichsreflektometrie gebräuchlich ist.

Die erste Leiterbahn und/oder die zweite Leiterbahn können aus Metall, insbesondere aus Nickel oder einer Nickellegierung, aufgebaut sein. Beispielsweise ist es möglich, die Leiterbahnen galvanisch abzuscheiden oder als Metallfolie auf das Substrat aufzukleben.

Gemäß einer bevorzugten Ausführungsform besitzt der Flächensensor ein zweites Zeitdomain-Reflektorelement, das eine dritte Leiterbahn und eine vierte Leiterbahn, die parallel zur dritten Leiterbahn verläuft, aufweist.

Die erste Leiterbahn kann mit der dritten Leiterbahn einen Winkel einschließen. Dieser Winkel liegt bevorzugt bei unter 15°. Eine weitere günstige Ausführungsform wird erhalten, wenn der Winkel größer ist als 80°.

Gemäß einer bevorzugten Ausführungsform ist das Substrat flexibel, also biegbar. Unter dem Merkmal, dass das Substrat flexibel ist, wird verstanden, dass es biegbar ist, ohne dass der Flächensensor seine Funktionsfähigkeit einbüßt. Insbesondere ist das Substrat so ausgebildet, dass es um zumindest 180° gebogen werden kann, so dass sich ein U ergibt. In diesem Fall sind auch die elektrischen Leiter und Leiterbahnen flexibel.

Vorzugsweise ist das Transportgrößen-Sensorelement zumindest überwiegend zwischen dem ersten Zeitdomain-Reflektorelement und dem zweiten Zeitdomain-Reflektorelement angeordnet ist. Hierunter ist insbesondere zu verstehen, dass das Transportgrößen-Sensorelement mit mindestens 50 % seiner Fläche in einer konvexen Hülle, also dem Bereich, der durch alle Strecken zwischen einem Punkt auf der ersten Leiterbahn und einem Punkt auf der zweiten Leiterbahn gebildet ist, angeordnet ist. Es ist dann möglich, aus den Messergebnissen, die mit dem ersten Zeitdomain-Reflektorelement und dem zweiten Zeitdomain-Reflektorelement erhalten werden, die Feuchte zwischen diesen zu bestimmen. Das erlaubt eine besonders genaue Charakterisierung des Probekörpers.

Gemäß einer Ausführungsform erstreckt sich die erste Leiterbahn entlang einer ersten Geraden, wobei sich die zweite Leiterbahn entlang einer zweiten Geraden erstreckt, die parallel zur ersten Geraden verläuft, und wobei das Transportgrößen-Sensorelement zwischen der ersten Geraden und der zweiten Geraden angeordnet ist. Das hat den Vorteil, dass eine Feuchtigkeitsmessung mit dem Zeitdomain-Reflektorelement die Feuchtigkeit zwischen den beiden Leiterbahnen und damit an der Stelle ermittelt, an der das Transportgrößen-Sensorelement die thermische Transportgröße misst. Insbesondere ist das Transportgrößen-Sensorelement zumindest überwiegend in einem Rechteck angeordnet, von dem zwei Seiten durch die erste Leiterbahn und durch die zweite Leiterbahn gebildet werden. In diesem Fall entspricht die vom Zeitdomain-Reflektorelement gemessene Feuchte in guter Näherung der Feuchte in dem Raumgebiet, in dem das Transportgrößen-Sensorelement die thermische Transportgröße misst.

Gemäß einer bevorzugten Ausführungsform hat die erste Leiterbahn und/oder die zweite Leiterbahn und/oder die dritte Leiterbahn und/oder die vierte Leiterbahn eine Dicke von weniger als 50 Mikrometer, insbesondere von weniger als 10 Mikrometer. Beispielsweise beträgt die Dicke 5 Mikrometer. Vorzugweise haben auch die elektrischen Leiter des Transportgrößen-Sensorelement diese Abmessung.

Gemäß einer bevorzugten Ausführungsform haben die erste Leiterbahn und/oder die zweite Leiterbahn eine Breite von weniger als 30 Millimeter, insbesondere weniger als 10 Millimeter. Es hat sich überraschend gezeigt, dass auch mit so schmalen Leiterbahnen eine verlässliche Messung der Feuchtigkeit möglich ist.

Vorzugsweise hat die erste Leiterbahn und/oder die zweite Leiterbahn eine Länge von zumindest 25 Millimetern, insbesondere 50 Millimetern. Die Länge beträgt vorzugsweise höchstens 200 Millimeter, insbesondere höchstens 40 Millimeter, beispielsweise höchstens 20 Millimeter.

Günstig ist es, wenn die erste Leiterbahn und die zweite Leiterbahn einen Abstand von zumindest 4 Millimetern, vorzugsweise zumindest 6 Millimetern haben. Vorzugsweise beträgt der Abstand höchstens 25 Millimeter. Ein Abstand zwischen 6 und 10 Millimetern, insbesondere von 8 Millimetern, ist besonders günstig. Alternativ oder zusätzlich haben die dritte Leiterbahn und die vierte Leiterbahn auch diesen Abstand. Es ist aber auch möglich, dass die dritte Leiterbahn und die vierte Leiterbahn einen Abstand voneinander haben, der kleiner ist als der Abstand von erster Leiterbahn und zweiter Leiterbahn.

Da die Auswerteeinheit mit dem zweiten Zeitdomain-Reflektorelement elektrisch verbunden und eingerichtet ist zum impulsförmigen Bestromen zumindest der dritten Leiterbahn, Messen einer frequenzabhängigen Dielektrizitätskonstante und/oder eines frequenzabhängigen Verlustfaktors und Bestimmen eines zweiten die Feuchte charakterisierenden Feuchtigkeitswerts zumindest auch aus der frequenzabhängigen Dielektrizitätskonstante und/oder dem frequenzabhängigen Verlustfaktor und Berechnen eines die Feuchte zwischen den Zeitdomain-Reflektorelementen charakterisierenden Feuchtigkeitswerts zumindest auch aus dem ersten Feuchtigkeitswert und dem zweiten Feuchtigkeitswert, kann beispielsweise der Mittelwert zwischen den, selbst gegebenenfalls durch Mittelung erhaltenen, Werten gebildet werden, die jeweils mit dem Zeitdomain-Reflektorelement gemessen werden. Es ist auch möglich, dass eine relative Abweichung der beiden Feuchtigkeitswerte berechnet wird und dass eine Warnmeldung ausgegeben wird, wenn die relative Abweichung einen Schwellenwert überschreitet. Dann nämlich ist der Prüfling hinsichtlich der Feuchteverteilung zu inhomogen.

Besonders günstig ist es, wenn in einer Kalibriermessung zumindest ein Körper, der eine hinreichend ähnliche Zusammensetzung wie der spätere Prüfling hat und eine bekannte Feuchtigkeitsverteilung besitzt, mittels der Zeitdomain-Reflektorelemente vermessen wird. Insbesondere werden mehrere derartige Messungen für verschiedene Feuchtigkeitsverteilungen durchgeführt und die Messergebnisse, die von den beiden Zeitdomain-Reflektorelementen aufgenommen werden, mit den Feuchtigkeitsverteilungen korreliert. Es ist möglich, dass die Auswerteeinheit einen digitalen Speicher aufweist, in dem ein Kennfeld mit den Messergebnissen der Kalibriermessungen hinterlegt ist. Aus den Messergebnissen der beiden Zeitdomain-Reflektorelemente kann dann die Feuchtigkeit zwischen den Zeitdomain-Reflektorelementen aus dem Kennfeld interpoliert werden.

Gemäß einer bevorzugten Ausführungsform besitzt die Messvorrichtung zwei freiliegende elektrische Kontakte, mittels denen Elektrolyte im Prüfling nachweisbar sind. Das erhöht die Messgenauigkeit der Feuchtemessung. Die elektrischen Kontakte können beispielsweise eine Fläche zwischen 0,25 und 2,5 Quadratzentimetern haben. Die etwaig vorhandene Auswerteeinheit ist bevorzugt mit den freiliegenden elektrischen Kontakten verbunden und eingerichtet zum Messen einer elektrischen Leitfähigkeit des Materials des Prüflings zwischen den beiden Kontakten.

Ein erfindungsgemäßes Verfahren wird vorzugsweise dadurch durchgeführt, dass der Flächensensor während der Messung mit dem Transportgrößen-Sensorelement in der gleichen Position relativ zum Prüfling angeordnet ist wie bei der Messung der Feuchte mittels des Zeitdomain-Reflektorelements.

Vorzugsweise werden Messwerte zu vorgegebenen Zeitpunkten mit dem Transportgrößen-Sensorelement aufgenommen werden, anhand derer die thermische Transportgröße bestimmbar ist, und die Messung des Feuchtigkeitswerts erfolgt zu Zeitpunkten, zu denen kein Messwert mit dem Transportgrößen-Sensorelement aufgenommen wird. In der DE 10 2009 009 762 werden Verfahren beschrieben, mit denen die thermische Transportgröße bestimmbar ist. Zur Vermeidung von Wiederholungen werden diese Verfahren hier nicht nochmals beschrieben.

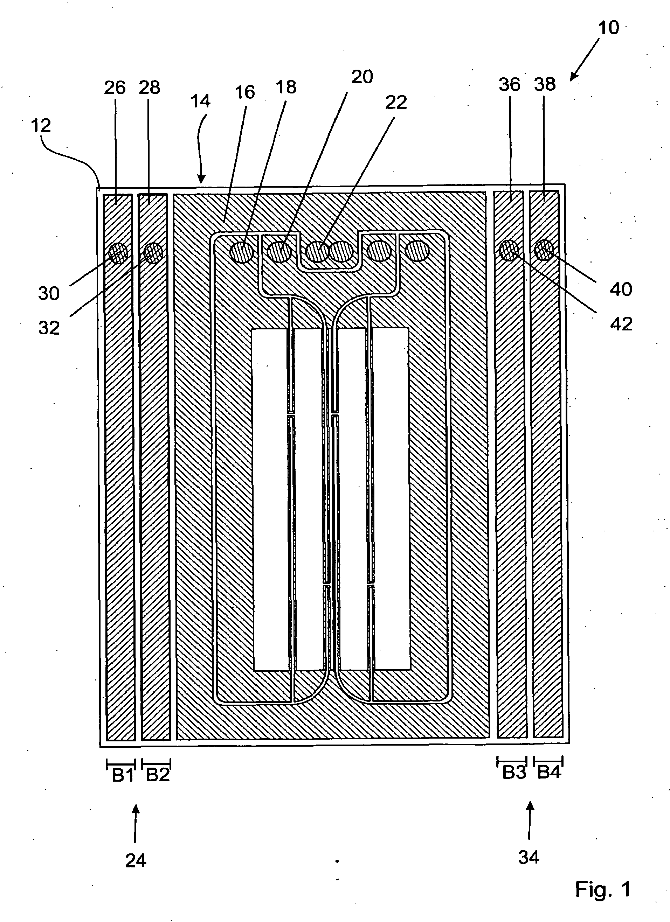

Im Folgenden wird die Erfindung anhand der beigefügten Zeichnungen näher erläutert. Dabei zeigt
- Figur 1: eine Ausführungsform eines erfindungsgemäßen Flächensensors als Teil einer erfindungsgemäßen Messvorrichtung zum Durchführen eines erfindungsgemäßen Verfahrens.

Figur 1 zeigt einen erfindungsgemäßen Flächensensor 10 zur Messung einer Wärmeleitfähigkeit *λ* und die Temperaturleitfähigkeit a, der ein flächiges, flexibles Substrat 12 aus einer Polyimid-Folie und ein Transportgrößen-Sensorelement 14 aufweist, das auf dem Substrat 12 angeordnet ist. Das Transportgrößen-Sensorelement 14 umfasst einen elektrischen Leiter 16, der an einem ersten elektrischen Kontakt 18 und einem zweiten elektrischen Kontakt 20 und einem dritten elektrischen Kontakt 22 kontaktiert werden kann.

Auf einer ersten Seite des Transportgrößen-Sensorelements 14 ist ein erstes Zeitdomain-Reflektorelement 24 angeordnet, das eine erste Leiterbahn 26 und eine zweite Leiterbahn 28 umfasst. Die erste Leiterbahn 26 ist über den ersten Leiterbahnkontakt 30 kontaktierbar, die zweite Leiterbahn mittels des zweiten Leiterbahnkontakts 32.

Die beiden Leiterbahnen 26, 28 sind streifenförmig und verlaufen in der hier gezeigten Ausführungsform parallel zueinander. Die erste Leiterbahn 26 hat eine erste Breite B1 von im vorliegenden Fall 5 Millimetern. Die zweite Leiterbahn 28 besitzt eine Breite B2, die im vorliegenden Fall der ersten Breite B1 entspricht.

Auf einer zweiten Seite des Transportgrößen-Sensorelements 14 ist ein zweites Zeitdomain-Reflektorelement 34 angeordnet, das eine dritte Leiterbahn 36 der Breite B3 und eine vierte Leiterbahn 38 der Breite B4 umfasst. Das zweite Zeitdomain-Reflektorelement 34 und das erste Zeitdomain-Reflektorelement 24 schließen das Transportgrößen-Sensorelement 14 zwischen einander ein.

Das zweite Zeitdomain-Reflektorelement 34 besitzt einen dritten elektrischen Kontakt 40 zum Kontaktieren der dritten Leiterbahn 36 und einen vierten elektrischen Kontakt 42 zum Kontaktieren der vierten Leiterbahn 38.

### Bezugszeichenliste

- 10: Flächensensor
- 12: Substrat
- 14: Transportgrößen-Sensorelement
- 16: dielektrischer Leiter
- 18: erster elektrischer Kontakt

- 20: zweiter elektrischer Kontakt
- 22: dritter elektrischer Kontakt
- 24: Zeitdomain-Reflektorelement
- 26: erste Leiterbahn
- 28: zweite Leiterbahn

- 30: erster Leiterbahnkontakt
- 32: zweiter Leiterbahnkontakt
- 34: zweites Zeitdomain-Reflektorelement
- 36: dritte Leiterbahn
- 38: vierte Leiterbahn

- 40: dritter elektrischer Kontakt
- 42: vierter elektrischer Kontakt

- *λ*: Wärmeleitfähigkeit
- A: Temperatur-Leitfähigkeit
- B1, B2: Breite

## Patentansprüche

1. Messvorrichtung mit
(i) einem Flächensensor (10), der
(a) ein flächiges Substrat (12) und
(b) ein flächiges Transportgrößen-Sensorelement (14) aufweist, das
- auf dem Substrat (12) angeordnet ist und
- zumindest einen elektrischen Leiter (16) aufweist, wobei der zumindest eine elektrische Leiter (16) so angeordnet ist, dass durch Bestromen des Leiters (16) mit einem elektrischen Strom und durch Messen eines elektrischen Widerstands die thermische Transportgröße (λ, a) bestimmbarist, und
(ii) einer Auswerteeinheit, die
- mit dem zumindest einen elektrischen Leiter (16) elektrisch verbunden ist und
- eingerichtet ist zum
Bestromen des Transportgrößen-Sensorelements (14) mit einem elektrischen Strom,
Messen eines elektrischen Widerstands am Transportgrößen-Sensorelement (14) und
Berechnen der thermischen Transportgröße (λ, a) zumindest auch aus dem elektrischen Strom und dem elektrischen Widerstand,
**dadurch gekennzeichnet, dass**
(iii) auf dem flächigen Substrat ein Zeitdomain-Reflektorelement (24) angeordnet ist, das
- eine erste Leiterbahn (26) und
- zumindest eine zweite Leiterbahn (28), die parallel zur ersten Leiterbahn verläuft, umfasst und dass
(iv) die Auswerteeinheit
- zumindest mit dem ersten Zeitdomain-Reflektorelement (24) elektrisch verbunden ist und
- eingerichtet ist zum
impulsförmigen Bestromen zumindest der ersten Leiterbahn (26), Messen einer frequenzabhängigen Dielektrizitätskonstante und/oder eines frequenzabhängigen Verlustfaktors und
Bestimmen eines die Feuchte charakterisierenden Feuchtigkeitswerts zumindest auch aus der frequenzabhängigen Dielektrizitätskonstante und/oder dem frequenzabhängigen Verlustfaktor,
(v) der Flächensensor (10) ein zweites Zeitdomain-Reflektorelement aufweist, das eine dritte Leiterbahn und eine vierte Leiterbahn, die parallel zur dritten Leiterbahn verläuft, aufweist, und wobei das Transportgrößen-Sensorelement (14) zumindest überwiegend zwischen dem ersten Zeitdomain-Reflektorelement (24) und dem zweiten Zeitdomain-Reflektorelement angeordnet ist, und
(vi) die Auswerteeinheit
- mit einem zweiten Zeitdomain-Reflektorelement elektrisch verbunden ist und
- eingerichtet ist zum
impulsförmigen Bestromen zumindest der dritten Leiterbahn, Messen einer frequenzabhängigen Dielektrizitätskonstante und/oder eines frequenzabhängigen Verlustfaktors und
Bestimmen eines zweiten die Feuchte charakterisierenden Feuchtigkeitswerts zumindest auch aus der frequenzabhängigen Dielektrizitätskonstante und/oder dem frequenzabhängigen Verlustfaktor und Berechnen eines die Feuchte zwischen den Zeitdomain-Reflektorelementen charakterisierenden Feuchtigkeitswerts zumindest auch aus dem ersten Feuchtigkeitswert und dem zweiten Feuchtigkeitswert.

2. Messvorrichtung nach Anspruch 1, **dadurch gekennzeichnet, dass** die erste Leiterbahn (26) und/oder die zweite Leiterbahn (28) und/oder die dritte Leiterbahn und/oder die vierte Leiterbahn eine Dicke von weniger als 50 Mikrometer hat.

3. Messvorrichtung nach einem der vorstehenden Ansprüche, **dadurch gekennzeichnet, dass** die erste Leiterbahn (26) und/oder die zweite Leiterbahn (28) eine Breite von weniger als 20 Millimetern, insbesondere weniger als 10 Millimeter, hat.

4. Messvorrichtung nach einem der vorstehenden Ansprüche, **dadurch gekennzeichnet, dass** die erste Leiterbahn (26) und/oder die zweite Leiterbahn (28) eine Breite von mehr als 3 Millimetern, insbesondere mehr als 4 Millimetern, hat.

5. Messvorrichtung nach einem der vorstehenden Ansprüche, **dadurch gekennzeichnet, dass** die erste Leiterbahn (26) und/oder die zweite Leiterbahn (28) eine Länge von zumindest 50 Millimetern hat.

6. Messvorrichtung nach einem der vorstehenden Ansprüche, **dadurch gekennzeichnet, dass** die erste Leiterbahn (26) und/oder die zweite Leiterbahn (28) eine Länge von höchstens 200 Millimetern hat.

7. Messvorrichtung nach einem der vorstehenden Ansprüche , **dadurch gekennzeichnet, dass** der elektrische Leiter (16)
(a) einen ersten Abschnitt, der
einen elektrischen Erstleiter-Widerstand aufweist und
so angeordnet ist, dass eine erste Fläche des Substrats (12) beheizbar ist, und
(b) einen zweiten Abschnitt, der
so angeordnet ist, dass eine zweite Fläche des Substrats (12) beheizbar ist, aufweist,
(c) wobei der erste Abschnitt und der zweite Abschnitt so angeordnet sind, dass
(i) die erste Fläche und die zweite Fläche
eine Außenfläche und eine Innenfläche bilden, wobei die Außenfläche die Innenfläche umgibt,
(ii) die zweite Fläche durch die Innenfläche und einen Außenflächenanteil der Außenfläche gebildet ist und
(iii) der zweite Leiter (16) im Außenflächenanteil einen elektrischen Außenflächenanteil-Widerstand hat, der einem elektrischen Erstleiter-Widerstand des ersten Leiters (16) entspricht.

8. Verfahren zum Messen einer thermischen Transportgröße (λ, a) eines Prüflings mit den Schritten:
(i) Anordnen eines Flächensensors (10) einer Messvorrichtung nach einem der vorstehenden Ansprüche mit thermischem Kontakt zum Prüfling,
(ii) Bestromen des Transportgrößen-Sensorelements (14) mit einem elektrischen Strom und Messen eines elektrischen Widerstands am Transportgrößen-Sensorelements (14),
(iii) Berechnen der thermischen Transportgröße (λ, a) zumindest auch aus dem elektrischen Strom und dem elektrischen Widerstand und
(iv) Messen eines die Feuchte des Prüflings charakterisierenden Feuchtigkeitswerts mittels des Zeitdomain-Reflektorelements.

9. Verfahren nach Anspruch 8, **dadurch gekennzeichnet, dass** der Prüfling aus Holz, geschäumtem Kunststoff, einem keramischen Baustoff oder Erde ist.

## Claims

1. A measuring device with
(i) a surface sensor (10) that comprises
(a) a flat substrate (12) and
(b) a flat transport value sensor element (14), that
- is arranged on the substrate (12) and
- comprises at least one electrical conductor (16), with the at least one electrical conductor (16) being placed so that application of an electrical current to the conductor (16) and measurement of the electrical resistance permits determination of the thermal transport value (λ, a), and
(ii) an evaluation unit that
- is electrically connected to the at least one electrical conductor (16) and
- set up for
the application of an electrical current to the transport value sensor element (14)
the measurement of an electrical impedance a the transport value sensor element (14) and
the calculation of the thermal transport value (λ, a) at least also from the electrical current and the electrical resistance,
**characterised in that**
(iii) there is a time domain reflector element (24) arranged on the flat sensor element that comprises
- a first conductor track (26) and
- at least a second conductor track (28) that run in parallel to the first conductor track, and that
(iv) the evaluation unit
- is electrically connected at least to the first time-domain reflector element (24) and
- set up for
the impulse application to at least the first conductor track (26), the measurement of a frequency-dependent electricity constant and/or a frequency-dependent loss factor and
the determination of a moisture-characteristic moisture value at least also from the frequency-dependent electricity constant and/or the frequency-dependent loss factor,
(v) the surface sensor (10) comprises a second time-domain reflector element, which comprises a third conductor track and a fourth conductor track running in parallel to the third conductor track, and with the transport value sensor element (14) being arranged at least mostly between the first time-domain reflector element (24) and the second time-domain reflector element, and
(vi) the evaluation unit
- is electrically connected to a second time-domain reflector element and
- set up for
the impulse application to at least the third conductor track,
the measurement of a frequency-dependent dielectricity constant and/or a frequency-dependent loss factor and
the determination of a second moisture-characterising moisture value at least also from the frequency-dependent dielectricity constant and/or the frequency-dependent loss factor and
the calculation of a moisture-value characterising the moisture between the time-domain reflector elements at least also from the first moisture value and the second moisture value.

2. The measuring device according to claim 1, **characterised in that** the first conductor track (26) and/or the second conductor track (28) and/or the third conductor track and/or the fourth conductor track has a thickness of less than 50 micrometres.

3. The measuring device according to one of the above claims, **characterised in that** the first conductor track (26) and/or the second conductor track (28) has a width of less than 20 millimetres, particularly less than 10 millimetres.

4. The measuring device according to one of the above claims, **characterised in that** the first conductor track (26) and/or the second conductor track (28) has a width of more than 3 millimetres, particularly more than 4 millimetres.

5. The measuring device according to one of the above claims, **characterised in that** the first conductor track (26) and/or the second conductor track (28) has a length of at least 50 millimetres.

6. The measuring device according to one of the above claims, **characterised in that** the first conductor track (26) and/or the second conductor track (28) has a length of no more than 200 millimetres.

7. The measuring device according to one of the above claims, **characterised in that** the electrical conductor (16)
(a) comprises a first section, which
has an electrical first conductor resistance and
is placed so that a first surface of the substrate (12) can be heated, and
(b) a second section,
placed so that a second surface of the substrate (12) can be heated,
(c) with the first section and the second section being placed so that
(i) the first surface and the second surface
form an outer surface and an inner surface, with the outer surface surrounding the inner surface,
(ii) the second surface is formed by the inner surface and an outer surface part of the outer surface and
(iii) the second conductor (16) has an electrical outer surface partial resistance in the outer surface part, which corresponds to the electrical first conductor resistance of the first conductor (16).

8. A method to measure a thermal transport value (λ, a) of a test piece with the steps:
(i) placement of a surface sensor (10) of a measuring device according to one of the above claims with thermal contact to the test piece,
(ii) application of an electrical current to the transport value sensor element (14) and measurement of an electrical resistance at the transport value sensor element (14),
(iii) calculation of a thermal transport value (λ, a) at least also from the electrical current and electrical resistance and
(iv) measurement of the moisture of the moisture value characterising the test pieces by the time-domain reflector element.

9. The method according to claim 8, **characterised in that** the test piece is made of wood, foamed plastic, a ceramic material or earth.

## Revendications

1. Dispositif de mesure comprenant
(i) un capteur surfacique (10) qui comprend
(a) un substrat plat (12) et
(b) un élément capteur plat (14) pour grandeur de transport ;
- qui est agencé sur le substrat (12) et
- qui comprend au moins un conducteur électrique (16), ledit au moins un conducteur électrique (16) étant agencé de telle façon qu'en alimentant le conducteur (16) avec un courant électrique et en mesurant une résistance électrique, il est possible de déterminer la grandeur de transport thermique (λ, a), et
(ii) une unité d'évaluation,
- qui est reliée électriquement avec ledit au moins un conducteur électrique (16), et
- qui est organisé pour
alimenter l'élément capteur (14) pour grandeur de transport avec un courant électrique,
mesurer une résistance électrique au niveau de l'élément capteur (14) pour grandeur de transport, et
calculer la grandeur de transport thermique (λ, a) au moins également à partir du courant électrique et de la résistance électrique,
**caractérisé en ce que**
(iii) sur le substrat plat est agencé un élément réflecteur (24) à domaine temporel,
- qui inclut une première piste conductrice (26), et
- qui inclut au moins une seconde piste conductrice (28) qui s'étend parallèlement à la première piste conductrice, et **en ce que**
(iv) l'unité d'évaluation
- est reliée électriquement au moins avec le premier élément réflecteur (24) à domaine temporel, et
- est organisée pour
alimenter au moins la première piste conductrice (26) en courant sous forme d'impulsions,
mesurer une constante diélectrique fonction de la fréquence et/ou un facteur de perte fonction de la fréquence, et
déterminer une valeur d'humidité caractérisant l'humidité, au moins également à partir de la constante diélectrique fonction de la fréquence et/ou du facteur de perte fonction de la fréquence,
(v) le capteur surfacique (10) comprend un second élément réflecteur à domaine temporel, qui comprend une troisième piste conductrice et une quatrième piste conductrice, qui s'étend parallèlement à la troisième piste conductrice, et dans lequel l'élément capteur (14) pour grandeur de transport est agencé au moins principalement entre le premier élément réflecteur à domaine temporel (24) et le second élément réflecteur à domaine temporel, et
(vi) l'unité d'évaluation
- est reliée électriquement à un second élément réflecteur à domaine temporel, et
- est organisée pour
alimenter au moins la troisième piste conductrice avec un courant en forme d'impulsions,
mesurer une constante diélectrique fonction de la fréquence et/ou un facteur de perte fonction de la fréquence, et
déterminer une seconde valeur d'humidité caractérisant l'humidité, au moins également à partir de la constante diélectrique fonction de la fréquence et/ou du facteur de perte fonction de la fréquence, et calculer une valeur d'humidité caractérisant l'humidité entre les éléments réflecteurs à domaine temporel, au moins également à partir de la première valeur d'humidité et de la seconde valeur d'humidité.

2. Dispositif de mesure selon la revendication 1, **caractérisé en ce que** la première piste conductrice (26) et/ou la seconde piste conductrice (28) et/ou la troisième piste conductrice et/ou la quatrième piste conductrice a une épaisseur de moins de 50 µm.

3. Dispositif de mesure selon l'une des revendications précédentes, **caractérisé en ce que** la première piste conductrice (26) et/ou la seconde piste conductrice (28) a une largeur de moins de 20 mm, en particulier moins de 10 mm.

4. Dispositif de mesure selon l'une des revendications précédentes, **caractérisé en ce que** la première piste conductrice (26) et/ou la seconde piste conductrice (28) a une largeur de plus de 3 mm, en particulier plus de 4 mm.

5. Dispositif de mesure selon l'une des revendications précédentes, **caractérisé en ce que** la première piste conductrice (26) et/ou la seconde piste conductrice (28) a une longueur d'au moins 50 mm.

6. Dispositif de mesure selon l'une des revendications précédentes, **caractérisé en ce que** la première piste conductrice (26) et/ou la seconde piste conductrice (28) a une longueur au maximum de 200 mm.

7. Dispositif de mesure selon l'une des revendications précédentes, **caractérisé en ce que** le conducteur électrique (16) comprend
(a) un premier tronçon,
qui comporte une résistance électrique de premier conducteur et
qui est agencé de telle façon qu'une première surface du substrat (12) peut être chauffée, et
(b) un second tronçon,
qui est agencé de telle façon qu'une seconde surface du substrat (12) peut être chauffée,
(c) dans lequel le premier tronçon et le second tronçon sont agencés de telle façon que
(i) la première surface et la seconde surface forment une surface extérieure et une surface intérieure, de sorte que la surface extérieure entoure la surface intérieure,
(ii) la seconde surface est formée par la surface intérieure et par une partie de la surface extérieure, et
(iii) le second conducteur (16) présente, dans la partie de surface extérieure, une résistance électrique propre à la partie de surface extérieure, qui correspond à une résistance électrique de premier conducteur du premier conducteur (16).

8. Procédé pour mesurer une grandeur de transport thermique (λ, a) d'un élément à contrôler, comprenant les étapes consistant à :
(i) agencer un capteur surfacique (10) d'un dispositif de mesure selon l'une des revendications précédentes avec un contact thermique vis-à-vis de l'élément à contrôler,
(ii) alimenter l'élément capteur (14) de grandeur de transport avec un courant électrique et mesurer une résistance électrique au niveau de l'élément capteur (14) pour grandeur de transport,
(iii) calculer la grandeur de transport thermique (λ, a) au moins également à partir du courant électrique et de la résistance électrique, et
(iv) mesurer, au moyen de l'élément réflecteur à domaine temporel, une valeur d'humidité caractérisant l'humidité de l'élément à contrôler.

9. Procédé selon la revendication 8, **caractérisé en ce que** l'élément à contrôler est en bois, en mousse de matière plastique, en un matériau céramique, ou est de la terre.
